# EUROPEAN PATENT APPLICATION

(11) **EP 3 647 652 A1**
(43) Date of publication of application: **06.05.2020**
(21) Application number: 18382777.3
(22) Date of filing: 31.10.2018
(51) Int. Cl.: F21S 41/19, B60R 16/02, H01R 13/58, F21S 45/10, H02G 11/00

(54) **AUTOMOTIVE ELECTRONIC DEVICE AND AUTOMOTIVE LIGHTING DEVICE**

(71) Applicant: VALEO ILUMINACION, S.A., 23600 Martos (ES)
(72) Inventor: FERNANDEZ, Ricardo, 23600 MARTOS (ES); GUERRERO, Alexis, 23600 MARTOS (ES); TORRES GONZALEZ, Alejandro, 23600 MARTOS (ES); PENA, David, 23600 MARTOS (ES); ANGILELLA, Yoann, 23600 MARTOS (ES)
(74) Representative: Valeo Vision

(57) **Abstract**

This invention provides an automotive electronic device comprising a housing (2), a conductive element (4), a closing element (5) and a guiding element (7). The housing (2) comprises at least a protruding wall and a main supplier (3). The conductive element (4) comprising a first end (41) connected to the main supplier (3) and a second end (42) intended to receive a device connector. The closing element (5) comprises at least a closing wall (51). The guiding element (71, 72, 73, 74) is configured to allow the positioning of the closing element (5) in at least two positions, a first position wherein there is a first path for the conductive element (4) between the first end (41) and the second end (42) and a second position wherein the closing wall (51) and/or the protruding wall (21) interfere in the first path so that the conductive element (4) is forced to follow a second path such that the distance between the first end (41) and the second end (42) is lower than the distance between the first end (41) and the second end (42) when the conductive element (4) follows the first path. The invention also provides an automotive lighting device (1) comprising such an automotive electronic device.

## Description

### TECHNICAL FIELD

This invention is related to the field of internal electrical connections in automotive lighting devices.

### STATE OF THE ART

When manufacturing a lighting device, lighting modules are both mechanically and electrically connected into the lighting device housing.

A spare portion of wire is needed to provide a margin for the connection of the lighting module to the connector. The spare portion is used to connect the lighting module, because the operator needs to separate the connector from the housing to perform the electric connection. After this electric connection has been achieved, the spare portion must be stored behind the module when the lighting module is mechanically connected to the housing. However, this stored spare portion may entangle or even cut by other elements in this process.

An alternative solution to the aforementioned problem is therefore sought.

### DESCRIPTION OF THE INVENTION

The invention provides an alternative solution for avoiding entangling of the spare portion by means of an automotive lighting device according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In an inventive aspect, the invention provides an automotive electronic device comprising
a housing comprising at least a protruding wall and a main supplier suitable for providing electrical supply and/or data;
a conductive element comprising a first end connected to the main supplier and a second end intended to receive a device connector;
a closing element comprising at least a closing wall;
a guiding element configured to allow the positioning of the closing element in at least two positions, a first position wherein there is a first path for the conductive element between the first end and the second end and a second position wherein the closing wall and/or the protruding wall interfere in the first path so that the conductive element is forced to follow a second path such that the distance between the first end and the second end is lower than the distance between the first end and the second end when the conductive element follows the first path.

With such an electronic device, a device which needs some extra length of the conductive element to be connected is allowed to be connected at a distance from the main supplier and the extra length is then safely kept by a labyrinth formed by the relative movement of the closing wall and the protruding wall. These closing wall and protruding wall, when positioned in the second position, create a labyrinth which interferes in the first path, so that the conductive element is forced to follow a more complicated path which makes the distance between the first end and the second end shorter. Thus, the conductive element is not trapped nor entangled with other elements of the electronic device, which would harm it, but is kept according a controlled path which stores the extra length that was needed for the connection between the conductive element and the device.

The two positions are obtained by a relative movement between the closing wall and the protruding wall. There is no limitation about which wall moves, since the effect is obtained by a relative movement between each other.

The first path may be a straight line or not, the relevant feature is that, when the closing element is arranged in the second position, the closing wall and/or the protruding wall interferes in this first path, making it impossible for the conductive element to follow this first path, and being forced to follow a second path which makes the distance between the first end and the second end shorter.

In some particular embodiments, the housing comprises more than one protruding wall and/or the closing element comprises more than one closing wall.

In this electronic device, the number of protruding walls and closing walls may be chosen depending on the extra length of the conductive element which is needed to provide a distance enough for the operator to perform the electric connection.

In some particular embodiments, the housing further comprises a guiding opening to guide the conductive element, in such a way that the second end of the conductive element is closer to the guiding opening than to the protruding wall.

A guide opening is useful to limit the movement of the conductive element while the protruding wall and the closing wall are moving with respect of each other.

In some particular embodiments, the guiding element comprises guiding walls to provide a sliding path for the closing element, so that the closing element may be slid between the guiding walls between the first and the second positions.

These guiding walls provide a smoother and more precise movement between the closing element and the protruding wall.

In some particular embodiments, the guiding element comprises a guiding slot and the closing element comprises a guiding protrusion intended to run along the guiding slot, to provide abutment for the first and the second positions of the closing element.

This guiding protrusion provides a controlled engagement between the closing element and the protruding wall.

In some particular embodiments, the conductive element comprises an electric wire. In some particular embodiments, the conductive element comprises a wire harness. In some particular embodiments, the conductive element comprises a flexible printed circuit board.

A conductive wire is a typical example of a conductive element, which is usually used to provide the electric connection between the electronic element and the main supply. However, other conductive elements may also be used in different embodiments of the invention, such as a wire harness or even a flexible printed circuit board, depending on the relation between the electronic element and the electronic device.

Embodiments of a flexible printed circuit board are known by the person skilled in the art, without the need of defining the word "flexible".

In some particular embodiments, the closing element is a harness cover.

A harness cover is an element which is usually present in an electronic device. It may be advantageously used to provide closing walls at the same time that it accomplishes it standard functionality.

In some particular embodiments, the automotive electronic device further comprises a retaining element to keep the closing element in the second position.

Once the electronic element has been connected and the conductive element has been set between the protruding wall and the closing wall, the closing element may be fixed by means of a retaining element, so that the closing element does not accidentally abandon the second position during the operation of the electronic device.

In some particular embodiments, the retaining element is at least one of a clip, a screw, a bolt or a rivet.

All of these elements are useful for this purpose, because the closing element is usually a light and simple part.

In some particular embodiments, the protruding wall is integrated into the housing.

This integration is advantageous, since a housing is a part where one of more protruding walls may be easily installed.

In some particular embodiments, the protruding wall is an additional element added to the housing.

This is another option, to adapt an existing housing to this invention. Protruding walls are simple elements which may be added to an existing housing without further effort.

In a second inventive aspect, the invention provides an automotive lighting device comprising an automotive electronic device according to the first inventive aspect, further comprising a lighting module comprising a device connector, the device connector being electrically connected to the second end of the conductive element.

A lighting module is a typical example of an electronic element which may require an extra wire length to be connected, and then this extra wire must be hidden behind the lighting module after this connection.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1a to 1c show three different positions of a first embodiment of a lighting device according to the invention.
Figures 2a to 2b show two different positions of a second embodiment of a lighting device according to the invention.
Figure 3 shows an automotive vehicle comprising a lighting device according to the invention.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

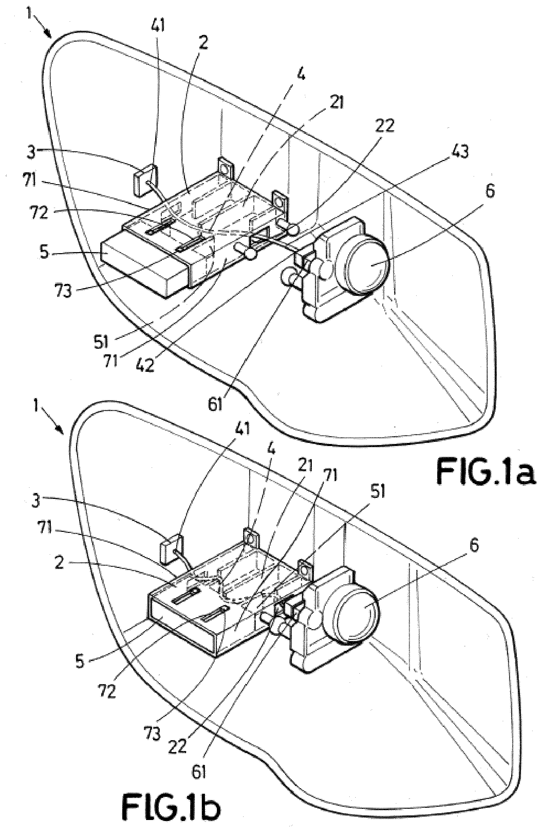

Figure 1a shows a first view of an embodiment of an automotive lighting device 1 according to the invention. This lighting device 1 comprises a housing 2 and a main supplier 3 suitable for providing electrical supply.

The housing 2 comprises three protruding walls 21. These protruding walls 21 protrude from one wall of the housing and have different lengths.

A conductive wire 4 is arranged with a first end 41 connected to the main supplier 3 and a second end 42 opposite to the first end. This conductive wire 4 is intended to provide an electric communication between the main supplier 3 and a lighting module which is going to be connected to the second end 42.

A closing element 5 is arranged in the lighting device 1. This closing element 5 comprises two closing walls 51, which are parallel to the protruding walls 21.

The housing also comprises a guiding opening 22 to guide the conductive wire 4, limiting the movement thereof when this conductive wire 4 may be subject to forces. This guiding opening 22 is closer to the second end 42 of the conductive wire 4 than any of the protruding walls 21.

Guiding walls 71 are also provided in the housing so that the closing element 5 may be slid between them when moved between the first position and the second position.

Also, the housing comprises a top wall with guiding slots 72. The closing element 5 comprises corresponding guiding protrusions 73 which are intended to run along the guiding slots 72. This system slot-protrusion provides a smooth movement and a final abutment for a clear definition of the first and the second positions of the closing element 5.

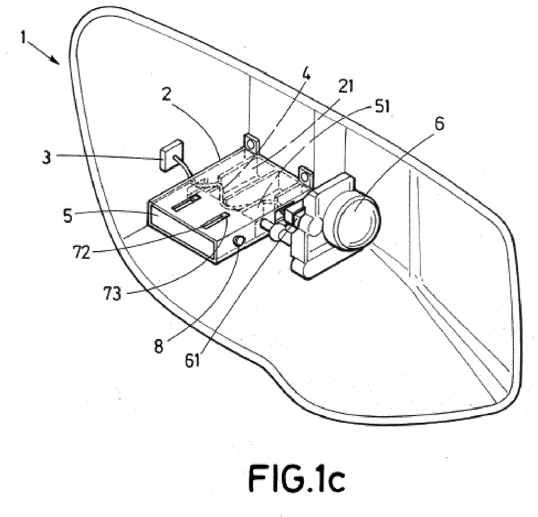

This figure 1 shows the closing element 5 in a first position, where the conductive wire 4 has a first path from the first end 41 to the second end 42. This first path is not a straight path, but allows an extra length 43 of the conductive wire 4 to stand out from the protruding walls. This extra length 43 of the conductive wire is used by an operator to achieve an electric connection between a lighting module 6 and the main supply 3, by means of coupling a module connector 61 to the second end 42 of the conductive wire 4. The operator has an extra length so that he may have direct eye contact to manipulate the coupling between the connectors, so that a proper connection is ensured.

Figure 1b shows this lighting device 1 wherein the closing element 5 is in a second position. In this second position, the closing walls 51 and the protruding walls 21 interfere in the first path so that the conductive wire 4 is forced to follow a second path which makes the distance between the first end and the second end shorter.

The extra length of the conductive wire 4 is therefore safely hidden, since it is bended by the protruding walls and the closing walls so that the conductive wire is not tangled or trapped between objects which may damage them or even cut them.

The guide opening 22 limits the movement of the conductive wire 4 to force it to adapt to the second path created by the new arrangement of the protruding walls 21 and the closing walls 51.

In different embodiments, instead of a conductive wire, different conductive elements may be used to transmit energy supply and/or data between the main supply and the lighting module, or any other electronic element which is placed instead of it. A wire harness or a flexible printed circuit board are examples of these conductive elements which are employed in different embodiments of the invention.

Figure 1c shows a third stage of this automotive lighting device, where the lighting module is mechanically connected to the housing and the closing element is kept in the second position by means of a retaining element. In this case, a bolt 8 has been used as a retaining element, although in different cases, a non-detachable attachment may be used, such as a rivet.

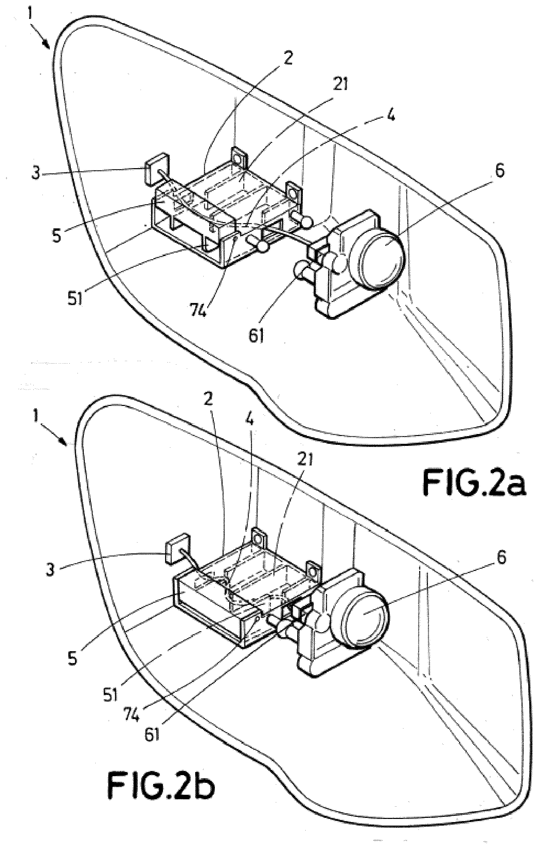

Figures 2a to 2b show an alternative embodiment for this invention. In this case, instead of a guiding slot with a guiding protrusion which slides therethrough, a hinge structure 74 is provided to join the closing element to the housing. In the first position, shown in Figure 2a, the closing element 5 is kept away from the conductive wire 4, and in the second position, shown in Figure 2b, the closing element turns around the hinge so that the closing walls interfere in the first path, causing the conductive wire to bend and adapt to the second path, which makes the distance between the first end and the second end shorter. In this case, there is no need to provide a retaining element, since the gravity and the hinge prevents the closing element from returning to the first position.

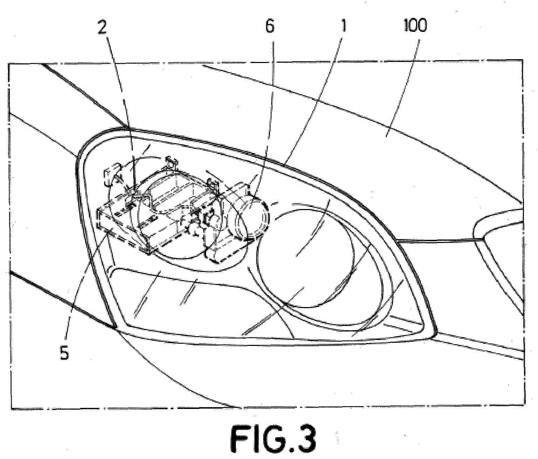

Figure 3 shows an automotive vehicle 100 comprising a lighting device 1 according to the invention.

## Claims

1. Automotive electronic device comprising
a housing (2) comprising at least a protruding wall (21) and a main supplier (3) suitable for providing electrical supply and/or data;
a conductive element (4) comprising a first end (41) connected to the main supplier (3) and a second end (42) intended to receive a device connector (61);
a closing element (5) comprising at least a closing wall (51);
a guiding element (71, 72, 73, 74) configured to allow the positioning of the closing element (5) in at least two positions, a first position wherein there is a first path for the conductive element (4) between the first end (41) and the second end (42) and a second position wherein the closing wall (51) and/or the protruding wall (21) interfere in the first path so that the conductive element (4) is forced to follow a second path such that the distance between the first end (41) and the second end (42) is lower than the distance between the first end (41) and the second end (42) when the conductive element (4) follows the first path.

2. Automotive electronic device according to claim 1, wherein the housing (2) comprises more than one protruding wall (21) and/or the closing element (5) comprises more than one closing wall (51).

3. Automotive electronic device according to any of the preceding claims, wherein the housing (2) further comprises a guiding opening (22) to guide the conductive element, in such a way that the second end (42) of the conductive element (4) is closer to the guiding opening (22) than to the protruding wall (21).

4. Automotive electronic device according to any of the preceding claims, wherein the guiding element comprises guiding walls (71) to provide a sliding path for the closing element (5), so that the closing element (5) may be slid between the guiding walls (71) between the first and the second positions.

5. Automotive electronic device according to any of the preceding claims, wherein the guiding element comprises a guiding slot (72) and the closing element (5) comprises a guiding protrusion (73) intended to run along the guiding slot (72), to provide abutment for the first and the second positions of the closing element (5).

6. Automotive electronic device according to any of the preceding claims, wherein the conductive element comprises an electric wire.

7. Automotive electronic device according to any of the preceding claims, wherein the conductive element comprises a wire harness.

8. Automotive electronic device according to any of the preceding claims, wherein the conductive element comprises a flexible printed circuit board.

9. Automotive electronic device according to any of the preceding claims, wherein the closing element (5) is a harness cover.

10. Automotive electronic device according to any of the preceding claims, further comprising a retaining element (8) to keep the closing element in the second position.

11. Automotive electronic device according to claim 10, wherein the retaining element is at least one of a clip, a screw, a bolt or a rivet.

12. Automotive electronic device according to any of the preceding claims, wherein the protruding wall (21) is integrated into the housing (2).

13. Automotive electronic device according to any claims 1 to 11, wherein the protruding wall (21) is an additional element added to the housing (2).

14. Automotive lighting device (1) comprising an automotive electronic device according to any of the preceding claims, further comprising a lighting module (6) comprising a device connector (61), the device connector (61) being electrically connected to the second end (42) of the conductive element (4).
